# EUROPEAN PATENT SPECIFICATION

(11) **EP 1 953 470 B1**
(45) Date of publication and mention of the grant of the patent: **09.03.2011**
(21) Application number: 08150121.5
(22) Date of filing: 09.01.2008
(51) Int. Cl.: F24F 11/00

(54) **Integrated management system and method for controlling multi-type air conditioners**
Integriertes Verwaltungssystem und -verfahren zur Steuerung von Mehrsystem-Klimaanlagen
Système de gestion intégrée et procédé de contrôle de climatiseurs d'air à fonctions multiples

(30) Priority: 01.02.2007 KR 20070010790
(43) Date of publication of application: 06.08.2008
(73) Proprietor: LG Electronics Inc., Seoul 150-721 (KR)
(72) Inventor: Cha, Byoung-Keun, Seoul (KR); Youn, Sang-Chul, Seoul (KR); Jeon, Duck-Gu, Seoul (KR)
(74) Representative: Vossius & Partner

(56) References cited:
- EP-A- 1 429 083
- EP-A- 1 703 684
- EP-A- 1 719 957
- EP-A- 1 804 007
- JP-A- 2006 052 928
- JP-A- 2006 337 021
- US-A- 5 435 147
- US-A1- 2002 104 323
- US-A1- 2005 209 739

## Description

The present invention relates to an integrated management system and method for controlling multi-type air conditioners, and more particularly, to an integrated management system and method for controlling multi-type air conditioners which can integrally be controlled by adding product information to a body portion of a communication protocol.

With the recent increase in the use of air conditioner systems, air conditioner systems are now used in most buildings and homes. As one type of air conditioner system, so-called "multi-type" air conditioners include indoor units disposed in each room of a home or in each office in an office building, and an outdoor unit shared by and connected to the plural indoor units.

Hereinafter, a system comprised of a plurality of multi-type air conditioner is referred to as a multi-type air conditioner system.

The plurality of air conditioner systems includes a local controller which detects operation states of the plurality of air conditioners and, according to the detection, controls the plurality of air conditioners via a gateway.

Recently, an integrated management system for controlling the multi-type air conditioners is being developed to integrally manage at least one air conditioner system at a long distance.

When operating such integrated management system for controlling the multi-type air conditioners, to integrally control the plurality of air conditioner systems, information related to the multi-type air conditioners, which are disposed in a particular area (e.g., a room or office) and are being operated, is collected.

The collected operation information (cycle data) is written (composed and formatted) according to a specific communication protocol, and includes operation information related to only an air conditioner which is being operated. A service manager may check operation information related to a corresponding air conditioner through a monitoring service, and remotely control at least one air conditioner system.

The document EP 1429083 refers to an integrated controlled multi-air conditioner system wherein a plurality of air conditioners can be controlled in an individual or integrated manner over an external internet network and in a remote manner over an external internet network.

However, when the at least one air conditioner system is remotely controlled, the service manager cannot know product information (e.g., product model name, type, capacity, etc.) related to all operating air conditioners, thereby making it difficult to maintain, manage and provide after-service.

That is, in order to maintain, manage and provide after-service to at least one air conditioner system, there is a need to know which products are disposed in a particular area.

However, since a related art communication protocol does not include provision for product information, the service manager cannot properly deal with problems which may arise.

Therefore, in order to solve those problems of the related art, it is an object of the present invention to provide an integrated management system and method for controlling multi-type air conditioners which can effectively enable to perform maintenance, management and after-service to at least one air conditioner system, by adding provision for product information into a communication protocol such that operation information and product information related to multi-type air conditioners from the at least one air conditioner system are received, stored and used.

To achieve these and other advantages and in accordance with the purpose of the present invention, as embodied and broadly described herein, there is provided an integrated management system for controlling multi-type air conditioners according to one embodiment of the present invention, comprising: one or more air conditioner systems each having one or more air conditioner groups provided with a local controller connected to multi-type air conditioners via a gateway, and configured to convert a first information data related to the one or more air conditioner groups according to a remote communication protocol for transmission; and a remote integrated management system configured to receive the first information data according to the remote communication protocol from the one or more air conditioner systems, and remotely control the one or more air conditioner systems based on the first information data.

Here, the remote integrated management system includes an application server which analyzes data received from the plurality of air conditioner systems and writes operation control information based on the analysis result according to the remote communication protocol for transmission; and a database server which stores product information analyzed by the application server.

To achieve these and other advantages and in accordance with the purpose of the present invention, as embodied and broadly described herein, there is provided an integrated management method for controlling multi-type air conditioners according to one embodiment of the present invention, comprising: a first step of converting a first information data related to one or more air conditioner groups according to a remote communication protocol for transmission; a second step of receiving the first information data converted according to the remote communication protocol for analysis, and writing operation control information based on the analysis result according to the remote communication protocol for transmission; and a third step of analyzing the operation control data received according to the remote communication protocol and operating based on the analysis result.

The accompanying drawings, which are included to provide a further understanding of the invention and are incorporated in and constitute a part of this specification, illustrate embodiments of the invention and together with the description serve to explain the principles of the invention.

Figure 1 is a schematic view illustrating an integrated management system for controlling multi-type air conditioners according to one embodiment of the present invention; and

Figure 2 is a flowchart illustrating an operation of an integrated management method for controlling multi-type air conditioners according to the present invention.

Description will now be given in detail to the preferred embodiments of the present invention, examples of which are illustrated in the accompanying drawings.

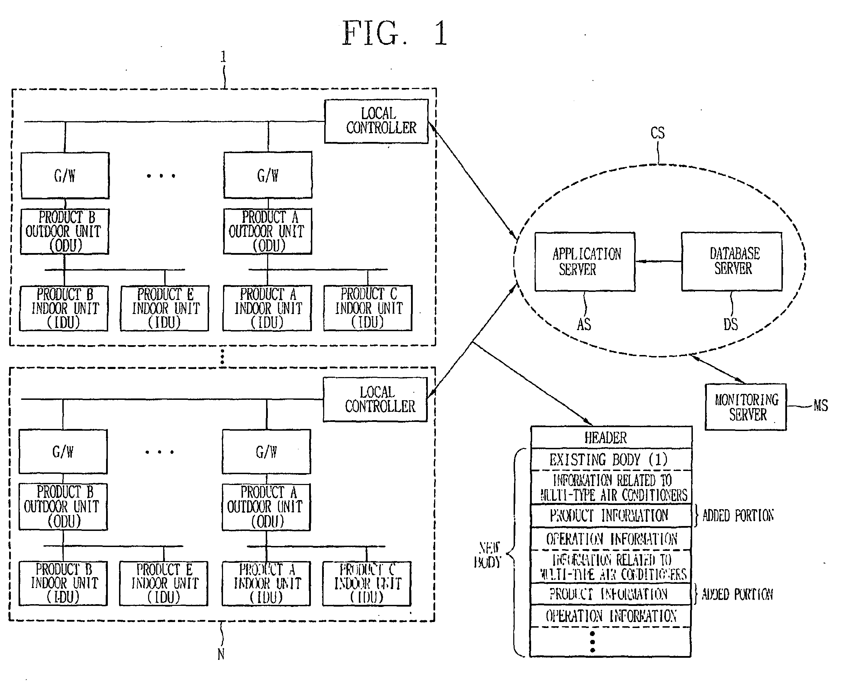

Figure 1 is a schematic view illustrating an integrated management system for controlling multi-type air conditioners according to one embodiment of the present invention.

As shown in Fig. 1, there are provided a plurality of air conditioner systems 1 to N, a remote integrated management system CS, and a monitoring server MS.

The plurality of air conditioner systems 1 to N each includes one or more air conditioner groups having a local controller connected to multi-type air conditioners via a gateway GW, converts operation information or product information related to the one or more of the air conditioner groups according to a remote communication protocol, and then transmits the converted data in a wireless or wired manner.

Here, the term "plurality of air conditioner groups" denotes installed air conditioning facilities including multi-type air conditioners capable of satisfying heating/cooling requirements of a corresponding building by connecting at least one indoor unit to one outdoor unit. The plurality of air conditioner groups allow not only to separately control each of the air conditioners using an indoor unit disposed in each room or space but also to integrally control every air conditioner in a building from a certain location by means of a local controller.

The remote integrated management system CS receives the data converted according to the remote communication protocol from the one or more air conditioner systems 1 to N, and remotely controls the one or more air conditioner systems 1 to N based on the received data.

The remote integrated management system CS is provided with an application server AS which analyzes data received from the plurality of air conditioner systems 1 to N, and writes operation control information based on the analysis result according to the remote communication protocol for transmission, and a database server DS which stores product information analyzed by the application server AS.

Here, the data received from the one or more air conditioner systems 1 to N includes a header portion containing data such as information related to the plurality of air conditioner systems 1 to N, version information, etc., and a body portion containing data such as an outdoor unit ID, a group number, operation state, operation mode, product information, and the like.

That is, the data utilized in accordance with the present invention includes product information related to a corresponding air conditioner group.

The monitoring server MS displays product information and operation information related to the plurality of the air conditioner systems 1 to N that a service manager desires to know.

Here, the monitoring server MS may be set to automatically display operation information related to the plurality of air conditioner systems 1 to N that the service manager wants to know.

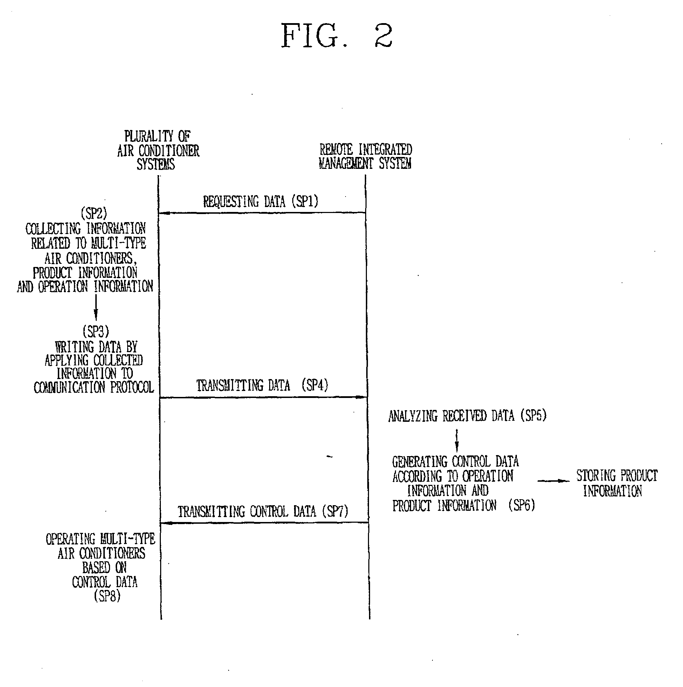

With such a configuration, the operation of the remote integrated management system for controlling the multi-type air conditioners according to the present invention will now be described with reference to Fig. 2.

First, according to the present invention, a communication protocol is changed such that product information can be added into the data exchanged between the remote integrated management system and the plurality of air conditioner systems.

Here, according to the present invention, the data to which the product information is added may be used by adding a simple operation to an existing network environment.

In such state, the remote integrated management system CS requests data from at least one air conditioner system 1 to N (SP1).

Then, the at least one air conditioner system 1 to N collects operation information and product information related to the plurality of air conditioner groups which are being operated (SP2), and writes data, in which product information is included, by applying the collected data to a communication protocol according to the present invention (SP3).

Next, the at least one air conditioner system 1 to N transmits the data so written according to the communication protocol to the remote integrated management system CS (SP4). The remote integrated management system CS analyzes the data received from the at least one air conditioner system 1 to N (SP5), and generates control data based on analyzed operation information and product information therein according to the analysis result (SP6).

Here, the remote integrated management system CS may automatically generate control data according to the analyzed operation information and product information, or may manually generate control data by command of the service manager who has recognized the operation information and product information.

In other words, the application server AS of the remote integrated management system CS analyzes data received from the plurality of air conditioner systems 1 to N, and writes operation control information based on the analysis result according to the remote communication protocol for transmission. The database server DS of the remote integrated management system stores the product information analyzed by the application server AS.

In addition, the monitoring server MS of the remote integrated management system CS is set to manually or automatically display the product information and operation information related to the plurality of air conditioner systems 1 to N that the service manager desires to know.

Thereafter, the remote integrated management system CS transmits control data based on the analyzed operation information and product information to the at least one air conditioner system 1 to N, and therefore, the one or more air conditioner systems 1 to N operate multi-type air conditioners connected thereto based on the control data.

That is, in accordance with the present invention, a communication protocol is changed such that product information can be added into transmission data exchanged between the plurality of air conditioner systems and the remote integrated management system.

The above-described integrated management system for controlling multi-type air conditioners according to the present invention can be applied to a system comprised of multi-type air conditioners and a single-type air conditioner, as well as to a system comprised of only multi-type air conditioners.

The preferred embodiments of the present invention have been described in detail with reference to the drawings; however, they should not be construed as limiting the scope of the present invention. Also, it will be obvious to those skilled in the art that variations may be implemented within the scope as defined by the appended claims.

As described above, the integrated management system for controlling multi-type air conditioners according to the present invention can effectively perform maintenance, management and after-service on at least one air conditioner system by adding product information to a communication protocol such that operation information and product information related to multi-type air conditioners from the at least one air conditioner system are received, stored and used.

The foregoing embodiments and advantages are merely exemplary and are not to be construed as limiting the present disclosure. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. An integrated management system for controlling multi-type air conditioners, comprising:
one or more air conditioner systems (1,...,N) each having one or more air conditioner groups each provided with a local controller connected to multi-type air conditioners via a gateway (G/W), and configured to convert a first information data related to the one or more air conditioner groups according to a remote communication protocol for transmission; and
a remote integrated management system (CS) configured to receive the first information data according to the remote communication protocol from the one or more air conditioner systems, and remotely control the one or more air conditioner systems based on the first information data,
**characterized in that**
the first information data includes one or more of operation information and product information of air conditioners composing the air conditioner groups, and the remote integrated management system (CS) comprises:
an application server (AS) which analyzes data received from the plurality of air conditioner systems and writes operation control information based on the analysis result according to the remote communication protocol for transmission; and
a database server (DS) which stores product information analyzed by the application server.

2. The integrated management system of claim 1, wherein the received data includes a header portion containing at least one of information rotated to the plurality of air conditioner systems and version information, and a body portion containing at least one of an outdoor unit ID, a group number, operation state, operation mode and product information.

3. The integrated management system of claim 1 or 2, wherein the remote integrated management system further comprises a monitoring server (MS) which displays product information and operation information related to the plurality of air conditioner systems.

4. An integrated management method for controlling multi-type air conditioners, comprising:
a first step of converting a first information data related to one or more air conditioner groups according to a remote communication protocol for transmission;
a second step of receiving the first information data converted according to the remote communication protocol for analysis, and writing operation control information based on the analysis result according to the remote communication protocol for transmission; and
a third step of analyzing the operation control data received according to the remote communication protocol and operating the one or more air
conditioner groups based on the analysis result,
**characterized in that**
the first information data includes one or more of operation information and product information of air conditioners composing the air conditioner groups.

5. The integrated management method of claim 4, wherein the second step includes a step of storing the analyzed operation control information.

6. The integrated management method of claim 4 or 5. further comprising:
displaying product information and operation information related to a plurality of air conditioner systems.

## Patentansprüche

1. Integriertes Verwaltungssystem zum Steuern von Mehrsystem-Klimaanlagen, das aufweist:
ein oder mehrere Klimaanlagensysteme (1, ..., N), von denen jedes ein oder mehrere Klimaanlagengruppen hat, die jeweils mit einer lokalen Steuerung versehen sind, die über ein Gateway (G/W) mit Mehrsystem-Klimaanlagen verbunden sind und konfiguriert sind, um erste sich auf die eine oder die mehreren Klimaanlagengruppen beziehende Informationsdaten gemäß einem Fernkommunikationsprotokoll für die Übertragung umzuwandeln; und
ein integriertes Fernverwaltungssystem (CS), das konfiguriert ist, um die ersten Informationsdaten gemäß dem Fernkommunikationsprotokoll von dem einen oder den mehreren Klimaanlagensystemen zu empfangen und das eine oder die mehreren Klimaanlagensysteme basierend auf den ersten Informationsdaten fernzusteuern,
**dadurch gekennzeichnet, dass**
die ersten Informationsdaten ein oder mehrere Betriebsinformationen und Produktinformationen von Klimaanlagen aufweisen, welche die Klimaanlagengruppen bilden, und wobei das integrierte Fernverwaltungssystem (CS) aufweist:
einen Anwendungsserver (AS), der Daten analysiert, die von den mehreren Klimaanlagensystemen empfangen werden, und basierend auf dem Analyseergebnis gemäß dem Fernkommunikationsprotokoll für die Übertragung Betriebssteuerungsinformationen schreibt; und
einen Datenbankserver (DS), der Produktinformationen speichert, die von dem Anwendungsserver analysiert werden.

2. Integriertes Verwaltungssystem nach Anspruch 1, wobei die empfangenen Daten umfassen: einen Anfangsblockabschnitt, der wenigstens eine Information in Bezug auf die mehreren Klimaanlagensysteme und Versionsinformation aufweist, und einen Körperabschnitt, der eine Außeneinheits-ID und/oder eine Gruppennummer und/oder eine Betriebszustands- und/oder eine Betriebsarts- und/oder Produktinformation aufweist.

3. Integriertes Verwaltungssystem nach Anspruch 1 oder 2, wobei das integrierte Fernverwaltungssystem ferner einen Überwachungsserver (MS) aufweist, der Produktinformationen und Betriebsinformationen in Bezug auf die Klimaanlagensysteme anzeigt.

4. Integriertes Verwaltungsverfahren zum Steuern von Mehrsystem-Klimaanlagen, das aufweist:
einen ersten Schritt des Umwandelns erster sich auf ein oder mehrere Klimaanlagengruppen beziehende Informationsdaten gemäß einem Fernkommunikationsprotokoll für die Übertragung;
einen zweiten Schritt des Empfangens der gemäß dem Fernkommunikationsprotokoll umgewandelten ersten Informationsdaten zur Analyse und des Schreibens von Betriebssteuerungsinformationen basierend auf dem Analyseergebnis gemäß dem Fernkommunikationsprotokoll für die Übertragung; und
einen dritten Schritt des Analysierens der gemäß dem Fernkommunikationsprotokoll empfangenen Betriebssteuerungsdaten und des Betreibens der einen oder der mehreren Klimaanlagengruppen basierend auf dem Analyseergebnis,
**dadurch gekennzeichnet, dass**
die ersten Informationsdaten ein oder mehrere Betriebsinformationen und Produktinformationen von Klimaanlagen enthalten, welche die Klimaanlagengruppen bilden.

5. Integriertes Verwaltungsverfahren nach Anspruch 4, wobei der zweite Schritt einen Schritt des Speicherns der analysierten Betriebssteuerungsinformationen umfasst.

6. Integriertes Verwaltungsverfahren nach Anspruch 4 oder 5, das ferner aufweist:
Anzeigen von Produktinformationen und Betriebsinformationen, die sich auf mehrere Klimaanlagensysteme beziehen.

## Revendications

1. Système de gestion intégrée pour réguler des climatiseurs d'air à fonctions multiples, comprenant :
un système ou une pluralité de systèmes de climatiseur d'air (1,..., N) chacun ayant un groupe ou une pluralité de groupes de climatiseurs d'air pourvus chacun d'un régulateur local raccordé à des climatiseurs d'air à fonctions multiples via une passerelle (G/W), et configurés pour convertir des premières données d'informations relatives au groupe ou à la pluralité de groupes de climatiseur d'air selon un protocole de communication à distance pour une transmission ; et
un système de gestion intégrée à distance (CS) configuré pour recevoir les premières données d'informations selon le protocole de communication à distance à partir du système ou de la pluralité de systèmes de climatiseur d'air, et réguler à distance le système ou la pluralité de systèmes de climatiseur d'air sur la base des premières données d'informations,
**caractérisé en ce que**
les premières données d'informations comprennent une ou plusieurs informations de fonctionnement et des informations de produit de climatiseurs d'air composant les groupes de climatiseur d'air, et le système de gestion intégrée à distance (CS) comprend :
un serveur d'application (AS) qui analyse des données reçues de la pluralité de systèmes de climatiseur d'air et écrit des informations de régulation de fonctionnement sur la base du résultat d'analyse selon le protocole de communication à distance pour une transmission ; et
un serveur de base de données (DS) qui stocke des informations de produit analysées par le serveur d'application.

2. Système de gestion intégrée selon la revendication 1, dans lequel les données reçues comprennent une partie d'en-tête contenant au moins une des informations relatives à la pluralité de systèmes de climatiseur d'air et d'informations de version, et une partie de corps contenant au moins une information parmi des informations d'une ID d'unité extérieure, d'un nombre de groupe, d'un état de fonctionnement, d'un mode de fonctionnement et de produit.

3. Système de gestion intégrée selon la revendication 1 ou 2, dans lequel le système de gestion intégrée à distance comprend en outre un serveur de surveillance (MS) qui affiche des informations de produit et des informations de fonctionnement relatives à la pluralité de systèmes de climatiseur d'air.

4. Procédé de gestion intégrée pour réguler des climatiseurs d'air à fonctions multiples, comprenant :
une première étape de conversion de premières données d'informations relatives à un groupe ou une pluralité de groupes de climatiseur d'air selon un protocole de communication à distance pour une transmission ;
une seconde étape de réception des premières données d'informations converties selon le protocole de communication à distance pour analyse, et l'écriture d'informations de régulation de fonctionnement sur la base du résultat d'analyse selon le protocole de communication à distance pour une transmission ; et
une troisième étape d'analyse des données de régulation de fonctionnement reçues selon le protocole de communication à distance et de fonctionnement du groupe ou de la pluralité de groupes de climatiseur d'air sur la base du résultat d'analyse,
**caractérisé en ce que**
les premières données d'informations comprennent une ou plusieurs informations de fonctionnement et des informations de produit de climatiseurs d'air composant les groupes de climatiseur d'air.

5. Procédé de gestion intégrée selon la revendication 4, dans lequel la seconde étape comprend une étape de stockage des informations de régulation de fonctionnement analysées.

6. Procédé de gestion intégrée selon la revendication 4 ou 5, comprenant en outre :
l'affichage d'informations de produit et d'informations de fonctionnement relatives à une pluralité de systèmes de climatiseur d'air.
